# EUROPÄISCHE PATENTANMELDUNG

(11) **EP 2 184 705 A1**
(43) Veröffentlichungstag der Anmeldung: **12.05.2010**
(21) Anmeldenummer: 08019637.1
(22) Anmeldetag: 10.11.2008
(51) Int. Cl.: G06Q 10/00, G06F 21/00

(54) **Verfahren, System und Gerät zum Verarbeiten von Rechten**

(71) Anmelder: Siemens Aktiengesellschaft, 80333 München (DE)
(72) Erfinder: Cuellar, Jorge, Dr., 82065 Baierbrunn (DE); Köpken, Hans-Georg, Dr., 91056 Erlangen (DE); Lenord, Matthias, Dr., 91088 Bubenreuth (DE); Maidl, Monika, Dr., 81675 München (DE)

(57) **Zusammenfassung**

Die Erfindung betrifft ein Verfahren zum Verarbeiten von Rechten, die einem Betreiber einer Vorrichtung (22,24,26,28, 30) oder einer Gruppe von Vorrichtungen (22-30) mittels eines Rechteobjekts (40) gewährt werden, welches zumindest das Empfangen eines Rechteobjekts (40) von einem Dritten, das Generieren zumindest eines abgeleiteten Rechteobjekts (44) auf der Grundlage des empfangenen Rechteobjekts (40) und das Weiterleiten des oder jedes abgeleiteten Rechteobjekts (44) an die Vorrichtung (22-30) oder einzelne Vorrichtungen aus der Gruppe von Vorrichtungen (22-30) umfasst, sowie ein nach dem Verfahren arbeitendes System und ein Gerät, welches zur Ausführung des Verfahrens bestimmt ist.

## Beschreibung

Die Erfindung betrifft ein Verfahren zum Verarbeiten von Rechten, die einem Betreiber einer Vorrichtung oder einer Gruppe von Vorrichtungen mittels eines elektronisch weiterleitbaren Rechteobjekts gewährt werden. Als Vorrichtungen der hier und im Folgenden relevanten Art kommen besonders Produktionsgeräte in Betracht, so dass mit dem Rechteobjekt einem Betreiber solcher Geräte Rechte verliehen werden können, die sich z.B. auf Art und Umfang zu produzierender oder produzierbarer Güter beziehen. Nachdem jedoch Unternehmen häufig Arbeiten, die einer Produktion vorgelagert sind oder produktionsbegleitend oder im Anschluss oder erst nach Abschluss der Produktion anfallen, outsourcen wollen oder müssen, kommen als Vorrichtungen auch Geräte, mit denen z.B. eine Simulation später zu erstellender Produkte möglich ist oder Geräte, mit denen sonstige, einer Produktion vorgelagerte Tests oder Untersuchungen durchgeführt werden können, in Betracht. Generell werden Rechteobjekte, wie sie bei der vorliegenden Erfindung im Vordergrund stehen, dann verwendet, wenn eine Partei geistiges Eigentum, wie z.B. Details über einen zu produzierenden Gegenstand, außer Haus geben muss, um entweder dessen Produktion oder produktionsvorgelagerte Arbeiten oder Untersuchungen wie oben skizziert zu veranlassen. Eine solche Weitergabe ist für den Rechteinhaber stets mit Risiken verbunden, die sich durch eine vertragliche Absicherung nur begrenzt handhaben lassen. Das Rechteobjekt ist dazu vorgesehen, die Rechte, die der Empfänger solcher Daten im Zusammenhang mit den jeweils in Auftrag gegebenen Dienstleistungen erhält, genau zu spezifizieren. So muss ein als Produktionsdienstleister agierender Betreiber entsprechender Produktionsvorrichtungen notwendig konstruktive oder sonstige technische Details der jeweils zu produzierenden Gegenstände kennen. Andererseits soll eine Produktion solcher Gegenstände nur innerhalb eines vertraglich bestimmten Umfangs möglich sein, so dass das Rechteobjekt zumindest eine vertraglich vereinbarte Mengenbegrenzung codiert. Ein Dienstleister, der produktionsbegleitend oder im Vorfeld einer Produktion z.B. Simulationen in Bezug auf die zu produzierenden Güter durchführt, muss möglicherweise nicht sämtliche Details des jeweiligen Gegenstands kennen, so dass ein an diesen übermitteltes Rechteobjekt bei Daten, die den jeweiligen Gegenstand vollumfänglich beschreiben, eine Leseberechtigung nur für solche Daten codiert, die für die von diesem Dienstleister durchzuführenden Simulationen relevant sind, z. B. nur Daten zur Geometrie und zur Oberflächenbeschaffenheit für Strömungsanalysen und keine Daten, die sich auf die interne Funktionalität des Gegenstandes beziehen. Umgekehrt ist für einen Dienstleister, der die elektrische Tauglichkeit eines Gerätes oder die Funktionalität einer davon umfassten Software zu verifizieren hat, eine Leseberechtigung für diesbezügliche Daten mit dem jeweiligen Rechteobjekt codiert, während ein Zugriff auf andere Daten verwehrt ist.

Eine Rechteverwaltung (Digital Rights Management; DRM) wie eingangs skizziert ist seit geraumer Zeit Gegenstand von Entwicklungsbemühungen und eine digitale Rechteverwaltung ist z.B. aus dem Bereich der Unterhaltungsindustrie bekannt, wo Datenträger mit Bild- und/oder Tondaten mit einem Kopierschutz versehen werden, um sicherzustellen, dass ein Erwerber keine Kopien zur unberechtigten Weitergabe anfertigt. Für Dienstleister, die im Auftrage von Inhabern von geistigem Eigentum, das sich z.B. auf derartige Bild- und Tondaten bezieht, Datenträger produzieren, ist bekannt, dass einer konkreten Produktionseinrichtung durch jeweils ein konkretes Rechteobjekt die Rechte zur Erstellung einer bestimmten Anzahl von Datenträgern gewährt werden.

Die Erfindung befasst sich demgegenüber mit dem Problem, dass bei der Erstellung, Visualisierung, Simulation, Produktion, usw. komplexerer Produkte, wie z.B. Teilen für die Automobilindustrie oder ähnlichem, eine solche starre Rechtevergabe wenig praktikabel ist, so dass eine elektronische Überprüfung und Begrenzung vertraglich eingeräumter Rechte bisher auf automatischem Wege nicht stattgefunden hat und man sich stattdessen auf Seiten des Rechteinhabers auf das wirtschaftliche Interesse des Empfängers der sensiblen Daten an einer langfristigen Zusammenarbeit verlassen hat oder hat verlassen müssen.

Die Untauglichkeit bisheriger Konzepte für den Bereich der Automatisierungstechnik, also der Automatisierung technischer Prozesse zur Simulation, Visualisierung, Design, Produktion usw. von insbesondere industriell hergestellten Gütern, ist vor allem dadurch bedingt, dass bei Vertragsabschluss kaum vorhersehbar ist, welche konkreten Vorrichtungen der jeweilige Auftragnehmer für die in Auftrag gegebenen Dienstleistungen verwendet. Bei einem Ingenieurbüro, das sich mit Strömungsanalysen und insoweit z.B. mit der Analyse von Oberflächengestaltungen strömungssensibler Gegenstände befasst, kommt als Vorrichtung, mit dem eine Dienstleistung, die von der Erfindung in Betracht gezogen wird, erbracht werden kann, ein Computer nach Art heute üblicher Personalcomputer, ggf. ein derartiger Computer mit erhöhter Rechenleistung, in Betracht. Wenn der Dienstleister mehrere derartige Vorrichtungen vorhält, kommt jede dieser Vorrichtungen in Betracht. Für den Dienstleister ist es aber günstig, wenn dieser je nach Arbeitsanfall und Auslastung entscheiden kann, welche Vorrichtung oder Vorrichtungen er konkret zur Erfüllung des jeweiligen Auftrags verwenden will.

Eine Aufgabe der vorliegenden Erfindung besteht also darin, das Konzept der digitalen Rechteverwaltung auch im Umfeld der Automatisierungstechnik praktikabel einsetzbar zu machen.

Diese Aufgabe wird mit den Merkmalen der unabhängigen Ansprüche gelöst. Bei einem Verfahren zum Verarbeiten von Rechten, die einem Betreiber einer Vorrichtung oder einer Gruppe von Vorrichtungen der eingangs genannten Art mittels eines Rechteobjekts gewährt werden, ist dazu zumindest das Empfangen eines Rechteobjekts von einem Dritten, danach das Generieren zumindest eines abgeleiteten Rechteobjekts auf der Grundlage des empfangenen Rechteobjekts und daran wiederum anschließend das Weiterleiten des oder jedes abgeleiteten Rechteobjekts an die Vorrichtung oder einzelne Vorrichtungen aus der Gruppe von Vorrichtungen vorgesehen. Der Begriff Vorrichtung bezieht sich also, wie eingangs bereits benutzt, auf Geräte und dergleichen, mit denen der Betreiber Dienstleistungen gegenüber dem Dritten, also insbesondere dem Rechteinhaber, erbringt. Die oben genannte Aufgabe wird ebenfalls mit einem System, das nach diesem Verfahren arbeitet, also einem System zum Verarbeiten von Rechten, die einem Betreiber einer Vorrichtung oder einer Gruppe von Vorrichtungen mittels eines Rechteobjekts gewährt werden, wobei das System mit der oder jeder Vorrichtung kommunikativ verbunden oder verbindbar ist, durch Mittel zum Empfangen eines Rechteobjekts von einem Dritten, Mittel zum Generieren zumindest eines abgeleiteten Rechteobjekts auf der Grundlage des empfangenen Rechteobjekts und Mittel zum Weiterleiten des oder jedes abgeleiteten Rechteobjekts an die Vorrichtung oder einzelne Vorrichtungen aus der Gruppe von Vorrichtungen gelöst. Des Weiteren wird die oben genannte Aufgabe auch mit einem z.B. zu dem vorgenannten System gehörigen Gerät gelöst, also einem Gerät zum Verarbeiten von Rechten, die einem Betreiber einer Vorrichtung oder einer Gruppe von Vorrichtungen mittels eines Rechteobjekts gewährt werden, wobei das Gerät mit der oder jeder Vorrichtung kommunikativ verbunden oder verbindbar ist, wobei das Gerät eine Funktionalität zum Empfangen eines Rechteobjekts von einem Dritten, eine Funktionalität zum Generieren zumindest eines abgeleiteten Rechteobjekts auf der Grundlage des empfangenen Rechteobjekts und eine Funktionalität zum Weiterleiten des oder jedes abgeleiteten Rechteobjekts an die Vorrichtung oder einzelne Vorrichtungen aus der Gruppe von Vorrichtungen umfasst.

Zweckmäßige Weiterbildungen von Verfahren, System und Gerät sind Gegenstand der jeweiligen Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bevorzugt ist vorgesehen, dass für den Schritt der Generierung des oder jedes abgeleiteten Rechteobjekts ein Netzwerkrechteagent vorgesehen ist, welcher zur Erzeugung abgeleiteter Rechteobjekte Erzeugungsregeln verwendet, die von dem empfangenen Rechteobjekt umfasst sind. Der Netzwerkrechteagent ist die zentrale Funktionalität des Verfahrens und der Netzwerkrechteagent ist diejenige Instanz, welche zentral die Generierung abgeleiteter Rechteobjekte vornimmt. Wenn die Generierung abgeleiteter Rechteobjekte durch den Netzwerkrechteagent anhand von Erzeugungsregeln erfolgt, die von dem empfangenen Rechteobjekt umfasst sind, kann der Rechteinhaber, also der Versender des ursprünglichen Rechteobjekts, die Erzeugung abgeleiteter Rechteobjekte beeinflussen, z.B. beschränken, insbesondere derart, dass z.B. nicht mehr als eine bestimmte Anzahl abgeleiteter Rechteobjekte erzeugt werden, nur abgeleitete Rechteobjekte für Vorrichtungen eines bestimmten Typs und/oder Leistungsumfangs generiert werden, usw. Für den Empfänger des ursprünglichen Rechteobjekts hat die Generierung abgeleiteter Rechteobjekte durch den Netzwerkrechteagenten den Vorteil, dass diejenigen Vorrichtungen, an die das oder jedes abgeleitete Rechteobjekt im Verlauf des Verfahrens weitergeleitet wird, zur Erfüllung des mit dem empfangenen Rechteobjekt im Zusammenhang stehenden Auftrags genutzt werden kann.

Bevorzugt wird der Schritt des Weiterleitens abgeleiteter Rechteobjekte mittels des gleichen Netzwerkrechteagenten durchgeführt. Der Netzwerkrechteagent ist dazu mit der oder jeder Vorrichtung kommunikativ verbunden. Das Generieren und Weiterleiten abgeleiteter Rechteobjekte ist damit quasi "in einer Hand" und die Verwendung ein und derselben Funktionalität für beide Verfahrensschritte hat z.B. den Vorteil, dass erforderliche Daten zum Generieren und Weiterleiten abgeleiteter Rechteobjekte in Bezug auf die bei dem Betreiber als Auftragnehmer zur Verfügung stehenden Vorrichtungen nur einmal vorgehalten werden müssen, zumindest durch nur eine Funktionalität, nämlich den Netzwerkrechteagenten, verarbeitet werden müssen.

Weiter bevorzugt ist vorgesehen, dass der Netzwerkrechteagent zum Weiterleiten abgeleiteter Rechteobjekte Weiterleitungsregeln verwendet, die von dem empfangenen Rechteobjekt umfasst sind oder separat zur Verfügung gestellt werden. Während die vorgenannten Erzeugungsregeln sich im Wesentlichen auf Bedingungen beziehen, die der Rechteinhaber vorgibt, basieren die Weiterleitungsregeln zumindest zum Teil auch auf Bedingungen, die sich an der Art und Anzahl der beim Betreiber als Auftragnehmer einer konkreten Dienstleistung zur Verfügung stehenden Vorrichtungen orientiert. Je nachdem in welchem Umfang der Rechteinhaber, also der Herausgeber des Rechteobjekts, auf die Weiterleitung abgeleiteter Objekte, also quasi die Rechtevergabe an einzelne Vorrichtungen des Auftragnehmers, Einfluss nehmen will, sind die Weiterleitungsregeln entweder in dem ursprünglich empfangenen Rechteobjekt enthalten oder sie werden separat zur Verfügung gestellt. Mischformen sind denkbar, derart, dass einzelne Weiterleitungsregeln oder bei komplexen Weiterleitungsregeln zu beachtende Bedingungen von dem ursprünglich empfangenen Rechteobjekt umfasst sind und dass andere Bedingungen separat vorgegeben werden, z.B. durch den Betreiber/Auftragnehmer.

Eine bevorzugte Ausführungsform des Verfahrens zeichnet sich dadurch aus, dass ein Weiterleiten abgeleiteter Rechteobjekte aufgrund separat zur Verfügung gestellter Weiterleitungsregeln zunächst das Feststellen, welche Vorrichtung oder Vorrichtungen aus der Gruppe von Vorrichtungen zum Ausführen von Operationen, die mit dem empfangenen Rechteobjekt oder einem abgeleiteten Rechteobjekt zugelassen werden, geeignet ist, und sodann auch das Bilden einer Menge, welche die oder jede geeignete Vorrichtung umfasst, das Ermitteln einer momentanen oder zukünftigen Auslastung jeder von der zuvor ermittelten Menge umfassten Vorrichtung, das Reduzieren dieser Menge durch Eliminierung jeder Vorrichtung, für die eine Auslastung oberhalb eines vorgegebenen oder vorgebbaren Schwellwertes ermittelt wurde und schließlich das Weiterleiten des oder jedes abgeleiteten Rechteobjekts an die oder jede Vorrichtung, die zuletzt noch Mitglied der Menge ist, umfasst. Diese Ausgestaltung des Verfahrens eröffnet eine Möglichkeit, eine für den Betreiber, also den Auftragnehmer des Rechteinhabers, wünschenswerte Flexibilität zu implementieren. Zunächst wird festgestellt, welche der vom Betreiber vorgehaltenen Vorrichtungen überhaupt für die in Auftrag gegebene Dienstleistung verwendbar sind. Wenn mehrere Vorrichtungen grundsätzlich in Betracht kommen, kann die Weiterleitung so gesteuert werden, dass eine Weiterleitung speziell an solche Vorrichtungen oder genau die Vorrichtung erfolgt, die entsprechend ihrer Auslastung am besten für die Verwendung im Zusammenhang mit dem vom Rechteinhaber erteilten Auftrag geeignet ist. Die Auslastung und der Schwellwert in Bezug auf die Auslastung können sich dabei auf eine zeitliche oder mengenmäßige Auslastung oder Kombinationen davon beziehen.

Alternativ oder zusätzlich ist vorteilhaft vorgesehen, dass der Schritt des Empfangs eines Rechteobjekts von einem Dritten eine Überprüfung einer von dem empfangenen Rechteobjekt umfassten Signatur, die vom Dritten zur Authentifikation des Rechteobjekts angebracht wurde, umfasst. Auf diese Art und Weise wird für den Auftragnehmer, also den Betreiber der Vorrichtung oder Vorrichtungen, sichergestellt, dass das empfangene Rechteobjekt tatsächlich vom Rechteinhaber oder zumindest von einer von diesem autorisierten Quelle stammt. Damit ist die Verlässlichkeit der von dem Rechteobjekt umfassten Daten gewährleistet.

Nachdem das empfangene Rechteobjekt in jedem Fall verschlüsselt übertragen wird, ist gewährleistet, dass unberechtigte Dritte, die den Vorgang des Übertragens des Rechteobjekts mithören, die von dem Rechteobjekt umfassten Daten nicht lesen und verwenden können. In diesem Zusammenhang ist vorgesehen, dass der Schritt des Empfangens eines Rechteobjekts von einem Dritten zumindest die Entschlüsselung des empfangenen Rechteobjekts mit einem Schlüssel eines Schlüsselpaars, von dem der öffentliche Teil dem Dritten zur Verschlüsselung des Rechteobjekts übermittelt wurde oder übermittelt wird, umfasst. Das Schlüsselpaar wird also auf Seiten des Dienstleisters erzeugt und ein Teil des Schlüssels, bevorzugt der öffentliche Teil, wird dem Dritten als Rechteinhaber übermittelt. Dieser verwendet den so erhaltenen Schlüssel zur Verschlüsselung eines zu versendenden Rechteobjekts. Damit ist gewährleistet, dass der Dienstleister das Rechteobjekt entschlüsseln und auf die davon umfassten Daten zugreifen kann. Als Daten umfasst das Rechteobjekt zumindest einen weiteren Schlüssel, der benötigt wird, um auf bereits übermittelte oder zu übermittelnde Daten zugreifen zu können, die das geistige Eigentum des Dritten darstellen.

Besonders bevorzugt ist dabei vorgesehen, dass der Schlüssel zum Entschlüsseln des empfangenen Rechteobjekts, also der beim Dienstleister verbleibende Teil des ursprünglich generierten Schlüsselpaares, in einem nur dem Netzwerkrechteagenten zugänglichen Speicher hinterlegt ist. Damit wird die Entschlüsselung für den Dienstleister transparent und kann automatisch durch den Netzwerkrechteagenten abgewickelt werden. Auf der anderen Seite gewährleistet die Speicherung des Schlüssels in einem ausschließlich dem Netzwerkrechteagenten zugänglichen Speicher zusätzliche Sicherheit gegen unbefugte Nutzung der übermittelten oder zu übermittelnden Daten, denn nur dieser Schlüssel gestattet den Zugriff auf das Rechteobjekt und mit dem Zugriff auf das Rechteobjekt und den darin enthaltenen Schlüssel den Zugriff auf das jeweilige geistige Eigentum. Weiter bevorzugt ist dabei vorgesehen, dass bei einem berechtigten Zugriff des Netzwerkrechteagenten auf ein Rechteobjekt ein darin enthaltener Schlüssel, der zum Zugriff auf separat übermitteltes geistiges Eigentum benötigt wird, ebenfalls in einem nur dem Netzwerkrechteagenten zugänglichen Speicher, vorzugsweise in dem zuvor schon erwähnten, dem Netzwerkrechteagenten exklusiv zugänglichen Speicher vorgehalten wird.

Nachdem eine auf Seiten des Auftragnehmers/Betreibers vorgenommene Entschlüsselung die von dem empfangenen Rechteobjekt umfassten Daten, speziell den Schlüssel zum Zugriff auf die mit dem Rechteobjekt gesicherten Daten, wieder les- und verarbeitbar macht, kann im Anschluss an das Entschlüsseln das Generieren abgeleiteter Rechteobjekte und deren Weiterleitung an eine oder einzelne Vorrichtungen aus der Gruppe von Vorrichtungen erfolgen. Für die Ver- und Entschlüsselung der übertragenden Daten kommt ein Ansatz zur Anwendung, wie er auch beim Digital-Rights-Management, so wie dieses bisher bekannt ist, verwendet wird: Zunächst wird auf Seiten des Dienstleisters ein Schlüsselpaar generiert, vorzugsweise ein Schlüsselpaar eines asymmetrischen Schlüssels. Einen Teil des Schlüsselpaars erhält der Rechteinhaber, der mit seinem Teil des Schlüsselpaars, insbesondere dem öffentlichen Schlüssel, ein dem Dienstleister zu übermittelndes Rechteobjekt verschlüsselt. Das Rechteobjekt seinerseits enthält einen Schlüssel, der zum Entschlüsseln des jeweils übermittelten geistigen Eigentums zu verwenden ist.

Das oben bereits beschriebene System, mit dem die oben genannte Aufgabe genauso wie mit dem jetzt beschriebenen Verfahren und dessen Ausgestaltungen gelöst wird, zeichnet sich in vorteilhaften Ausführungsformen im Wesentlichen durch Mittel aus, die zum Ausführen der einzelnen Verfahrensschritte, die von dem Verfahren und dessen Ausgestaltungen umfasst sind, vorgesehen sind. Insoweit wird auf die vorangehende Beschreibung mit dem Hinweis verwiesen, dass mit jedem Verfahrensschritt eine Funktionalität des Gesamtsystems, das genau diesen Verfahrensschritt ausführt, verbunden ist.

Auch soweit ein Gerät wie eingangs beschrieben betroffen ist, mit dem die oben genannte Aufgabe gelöst wird, kann im Wesentlichen auf die vorangehende Beschreibung des Verfahrens und dessen Ausgestaltungen verwiesen werden. Das Gerät ist funktional im Wesentlichen identisch mit dem Netzwerkrechteagenten und die Bezeichnungen werden insoweit im Weiteren auch synonym verwendet. Tatsächlich ist das in den Ansprüchen genannte Gerät eine Vorrichtung, mit der die Funktionalität des Netzwerkrechteagenten implementiert ist. Die Funktionalität des Netzwerkrechteagenten zerfällt wiederum in Einzelfunktionalitäten, z.B. das Empfangen eines Rechteobjekts von einem Dritten, das Generieren abgeleiteter Rechteobjekte und deren Weiterleiten an einzelne Vorrichtungen aus der Gruppe von Vorrichtungen. Insofern wird auch für bevorzugte Ausführungsformen des Gerätes, also des Netzwerkrechteagenten, auf die vorangehende Beschreibung mit dem Hinweis, dass mit jedem Verfahrensschritt auf Seiten des Netzwerkrechteagenten eine Funktionalität zu dessen Ausführung assoziiert ist, hingewiesen.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen, auch soweit sie Arbeitsverfahren betreffen.

Darin zeigen
- FIG 1: ein Szenario, mit dem sich die Erfindung befasst, nämlich einen Rechteinhabereinflussbereich mit geis- tigem Eigentum des Rechteinhabers und einem Dienst- leistereinflussbereich mit Vorrichtungen, die z.B. zur Produktion von Gütern entsprechend dem geistigem Eigentum in Betracht kommen, so dass das geistige Ei- gentum in den Dienstleistereinflussbereich übergehen muss,
- FIG 2: eine schematisch vereinfachte Darstellung des Ansat- zes gemäß der Erfindung zur Sicherung des geistigen Eigentums gegen unberechtigte Verwendung bei gleich- zeitig hoher Flexibilität im Hinblick auf dessen Ver- wendung bei oder auf einzelnen oder mehreren Vorrich- tungen und
- FIG 3: Details einer bevorzugten Ausführungsform des in FIG 2 gezeigten Konzeptes.

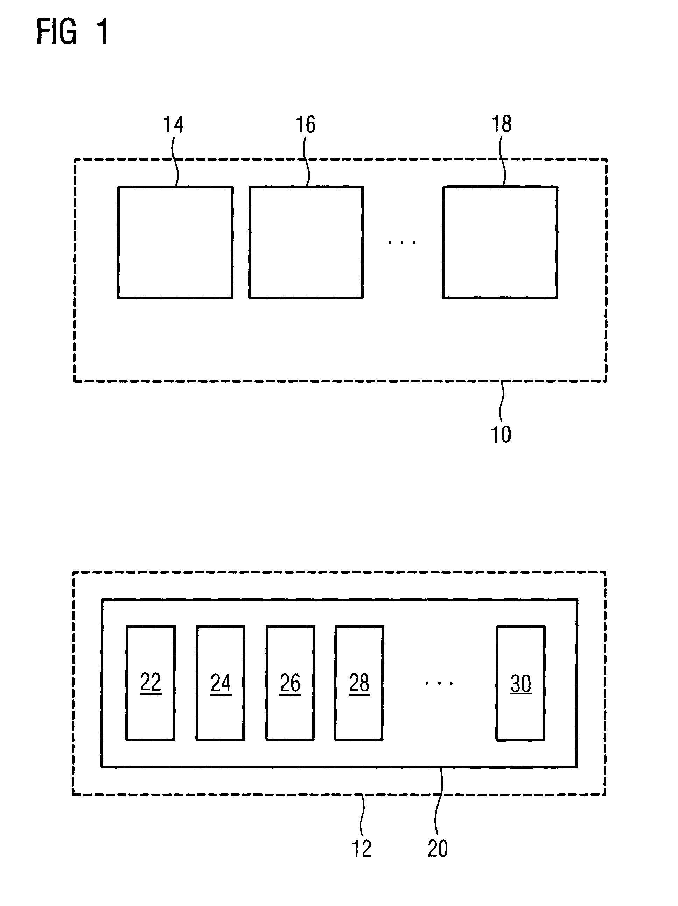

FIG 1 zeigt schematisch vereinfacht ein Szenario, mit dem sich die Erfindung befasst. Dabei sind im oberen Teil der Darstellung schematisch ein Rechteinhabereinflussbereich 10 und im unteren Bereich ein Dienstleistereinflussbereich 12 dargestellt. Der Rechteinhaber verfügt in seinem Einflussbereich 10 über geistiges Eigentum 14, 16, 18, z.B. Baupläne mit Maßen und dergleichen, für die Herstellung eines Produkts, z.B. eines Automobilteils. Im angenommenen Szenario soll davon ausgegangen werden, dass der Rechteinhaber die Herstellung des Produkts nicht selbst vornehmen kann oder will. Zu diesem Zweck ist also ein Teil des geistigen Eigentums 14-18 des Rechteinhabers an einen Dienstleister zu übermitteln. Der Dienstleister verfügt in seinem Einflussbereich 12 z.B. über eine Produktionsanlage 20 mit im Folgenden als Vorrichtungen 22, 24, 26, 28, 30 bezeichneten Produktionsmitteln. Neben einem produzierenden Dienstleister kommt als Dienstleister genauso z.B. ein Ingenieurbüro in Betracht, das keine Herstellung des Produkts vornimmt, sondern produktionsvorbereitend oder produktionsbegleitend Analysen, z.B. Strömungsanalysen und dergleichen. Diese und andere denkbare Dienstleistungen und für deren Erbringung vorgesehene Vorrichtungen 22-30 sollen als von der nachfolgenden Beschreibung umfasst gelten, wenn auf "Produktion", die Anlage 20 und die oder jede davon umfasste Vorrichtung 22-30 Bezug genommen wird.

Für die Veranlassung einer Produktion eines Teils durch Dritte hat bisher der Rechteinhaber aus seinem Einflussbereich 10 dem Betreiber der Anlage 20 Elemente seines geistigen Eigentums 14-18 in dessen Einflussbereich 12 übergeben. Dazu kommt grundsätzlich jedes Medium in Betracht und wenn historisch zunächst von der Übergabe von z.B. Konstruktionsplänen auszugehen ist, werden heute üblicherweise elektronische Daten, also z.B. CAD, CAM, CAE-Daten usw., ausgetauscht.

Mit der Verfügbarkeit des geistigen Eigentums 14-18 des Rechteinhabers im Einflussbereich 12 des Betreibers der Anlage 20 kann dieser grundsätzlich nach eigenem Gutdünken mit dem fremden geistigen Eigentum 14-18 verfahren. Die Einflussmöglichkeit des Rechteinhabers ist auf vertragliche Vereinbarungen mit dem Betreiber der Anlage 20 und deren Durchsetzbarkeit diesem gegenüber begrenzt, was für den Rechteinhaber oftmals unzureichend ist.

Speziell aus der Unterhaltungsindustrie kennt man Ansätze zur Sicherung von geistiges Eigentum betreffenden Rechten und als bekanntestes Beispiel sind Kopierschutzmechanismen zu nennen. Kopierschutzmechanismen sind im vorliegenden Szenario jedoch nicht zielführend, denn ein Kopierschutz könnte bestenfalls die Vervielfältigung fremden geistigen Eigentums im Einflussbereich 12 des Betreibers der Anlage 20 verhindern, lässt ansonsten das fremde geistige Eigentum 14-18 in diesem Einflussbereich 12 aber unbeschränkt zugänglich, so dass eine elektronische Verkörperung geistigen Eigentums 14-18, z.B. durch Ausdrucken und dergleichen, auf ein anderes Medium überführt und von dort ohne Weiteres vervielfältigt werden kann.

Des Weiteren ist auch bekannt, einzelne Vorrichtungen 22-30 einer Anlage 20 durch eine entsprechende Steuereinheit oder eine Ergänzung einer solchen Einheit nur für die Produktion einer bestimmten Menge von Gütern zuzulassen. Dies kennt man z.B. aus dem Bereich der Zigarettenherstellung, wo ein Produzent mit seinen Anlagen, also Vorrichtungen 20-30, grundsätzlich für unterschiedliche Markeninhaber tätig werden kann und selbstverständlich jeder Markeninhaber daran interessiert ist, dass unter seiner Marke nur die mit dem Betreiber der Anlage 20 vereinbarte Menge produziert wird. Dieser Ansatz ist für das verallgemeinerte Probleme, das der Erfindung zugrunde liegt, auch nicht zielführend, weil ausschließlich Mengenbegrenzungen für jeweils einzelne Vorrichtungen 22-30 vorgebbar sind. Der Betreiber der Anlage 20 kann nicht flexibel auf Kundenwünsche reagieren und z.B. vom Rechteinhaber gewünschte Mengen in kürzerer Zeit produzieren, indem zur Produktion mehr als eine Vorrichtung 22-30 eingesetzt wird, ohne dass aufwendig und weitgehend ohne Nachprüfungsmöglichkeit durch den Rechteinhaber in die Steuerungseinheiten der jeweiligen Vorrichtungen 22-30 und die dort hinterlegten Mengenbegrenzungen eingegriffen werden muss.

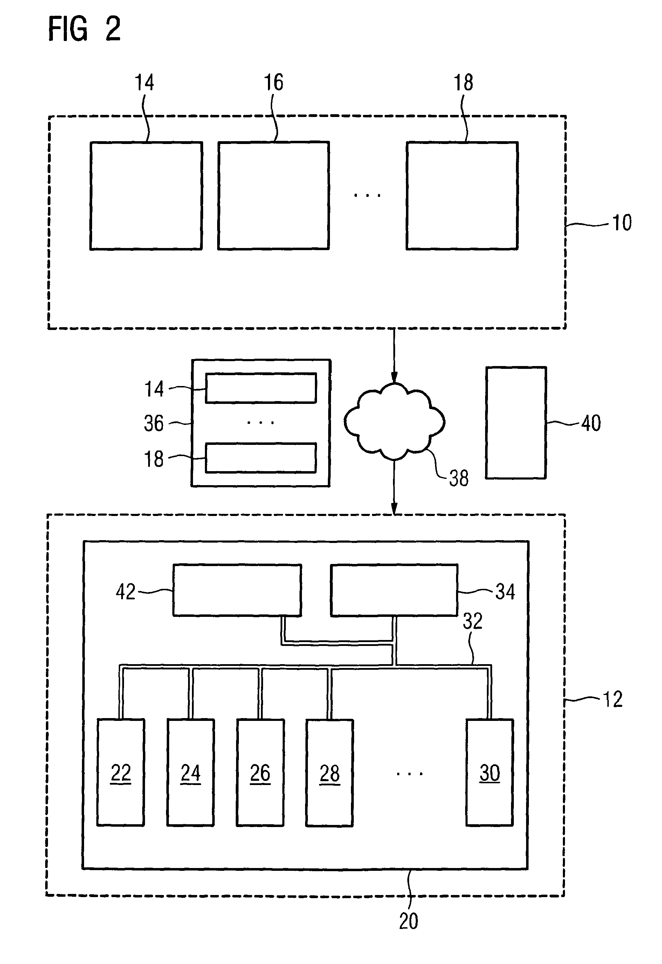

Mit FIG 2 soll nun der grundlegende Aspekt des Ansatzes gemäß der Erfindung zumindest schematisch vereinfacht dargestellt werden. Die Darstellung in FIG 2 wiederholt diejenige in FIG 1, wobei der Einflussbereich 10 des Rechteinhabers auch als Darstellung des Rechteinhabers selbst und entsprechend der Einflussbereich 12 des Betreibers der Anlage 20 auch als schematische Darstellung des Betreibers selbst aufgefasst werden kann. Entsprechend werden die eingeführten Bezugszeichen im Folgenden auch für den Rechteinhaber 10 und den Betreiber/Auftragnehmer 12 verwendet.

Der Ansatz gemäß der Erfindung basiert zunächst darauf, dass auf Betreiberseite vorausgesetzt wird, dass zwischen den von der Anlage 20 umfassten Vorrichtungen 22-30 eine kommunikative Verbindung für eine Übermittlung von Daten an diese, aber auch für einen Datenaustausch untereinander, z.B. nach Art eines Busses 32, insbesondere eines Feldbusses, gegeben ist. Weiterhin wird davon ausgegangen, dass die Anlage 20 zumindest eine übergeordnete Einheit 34 umfasst, die im Sprachgebrauch häufig als Server oder dergleichen bezeichnet wird, die über den Bus 32 den Vorrichtungen 22-30 Sollwerte für Produktionsvorgänge, z.B. Materialdicken, Betriebsgeschwindigkeiten usw., vorgibt. Der Server kann abweichend von der Darstellung in FIG 2 auch von einer der Vorrichtungen 22-30 umfasst sein und in einem jeder Vorrichtung 22-30 zugeordneten aber nicht separat dargestellten Steuerungsteil implementiert sein.

Wenn der Rechteinhaber 10 durch den Betreiber 12 (Auftragnehmer) gemäß dem eingangs skizzierten Szenario ein Produkt z.B. in einer bestimmten Stückzahl fertigen lassen will, übermittelt er einen diesbezüglichen Teil seines geistigen Eigentums 14-18 in Form einer Produktbeschreibung 36. Die Übermittlung der Produktbeschreibung 36 erfolgt auf elektronischem Wege, z.B. durch Verwendung heute gebräuchlicher Wege zum Datenaustausch, insbesondere das Internet 38. Für eine derartige Übertragung ist die Produktbeschreibung 36 verschlüsselt, und zwar mit einem dem Dienstleister unbekannten Schlüssel, der im Rechteobjekt 40 an den Netzwerkrechteagenten 42 übertragen wird. Zusammen mit der Produktbeschreibung 36, ggf. auch von dieser umfasst, wird ein evtl. ebenfalls verschlüsseltes und/oder elektronisch signiertes Rechteobjekt 40 an den Auftragnehmer 12 übertragen. Das Rechteobjekt 40 ist mit einem Teil eines auf Seiten des Dienstleisters generierten und an den Rechteinhaber übermittelten Schlüsselpaars verschlüsselt. Bei dem Schlüsselpaar handelt es sich bevorzugt um einen asymmetrischen Schlüssel und der dem Rechteinhaber übermittelte Teil ist bevorzugt der öffentliche Teil eines solchen Schlüsselpaars. Der Rechteinhaber verschlüsselt jedes Rechteobjekt mit seinem Teil des Schlüsselpaars. Der Dienstleister wiederum behält seinen Teil des Schlüsselpaars und verwendet diesen zur Entschlüsselung empfangener Rechteobjekte. Damit wird ein von dem Rechteobjekt umfasster Schlüssel zugänglich, der zur Entschlüsselung der Produktbeschreibung 36 erforderlich ist.

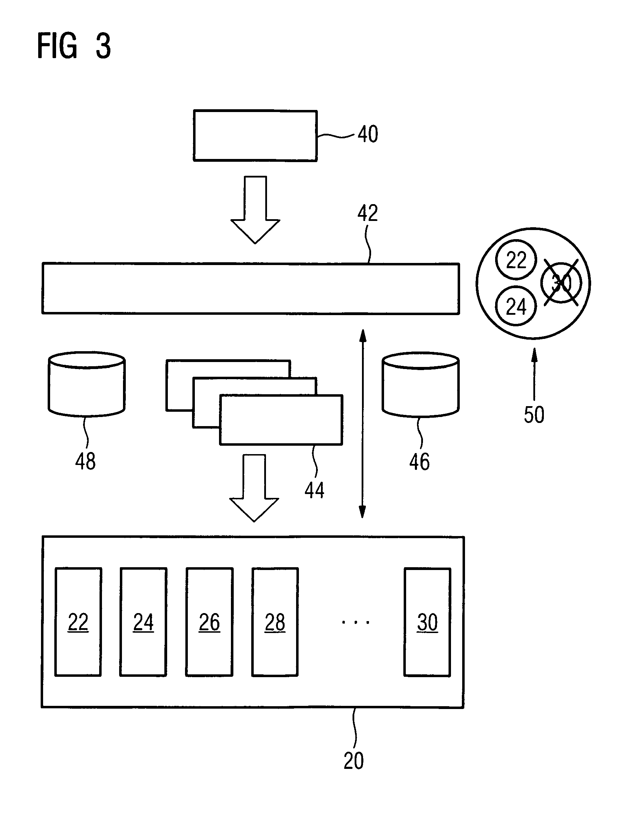

Das Rechteobjekt 40 ist an die Produktbeschreibung 36 gebunden und definiert die dem Auftragnehmer 12 im Rahmen des zwischen Rechteinhaber 10 und Auftragnehmer 12 geschlossenen oder zu schließenden Vertrags zugelassenen oder eingeräumten Nutzungsmöglichkeiten der Produktbeschreibung 36. Die bloße Verfügbarkeit des Rechteobjekts 40 auf Seiten des Auftragnehmers 12 schafft jedoch noch nicht die speziell vom Auftragnehmer 12 zu wünschende, in letzter Konsequenz beiden Parteien dienliche Flexibilität. Für eine solche Flexibilität ist auf Seiten des Betreibers 12 als Bestandteil von dessen Anlage 20 ein Netzwerkrechteagent 42 oder ein ansonsten nicht näher dargestelltes Gerät, mit dem eine solche Funktionalität implementiert wird, vorgesehen. Der Netzwerkrechteagent 42 fungiert logisch als Schnittstelle zwischen dem empfangenen Rechteobjekt 40 und einzelnen oder allen Vorrichtungen 22-30 der Anlage 20, mit denen der Betreiber 12 Dienstleistungen für den Rechteinhaber 10 erbringen kann. Dazu ist der Netzwerkrechteagent 42 kommunikativ mit dem Server und der oder jeder Vorrichtung 22-30 verbunden, im dargestellten Fall, indem er an den Bus 32 angeschlossen ist. Weitere Details sind in FIG 3 dargestellt.

FIG 3 zeigt schematisch vereinfacht die Funktionalität des Netzwerkrechteagenten 42. Der Netzwerkrechteagent 42 oder ein Gerät, das diesen umfasst, ist ein Beispiel für das in der Beschreibungseinleitung zur Lösung der dort definierten Aufgabe erwähnte Gerät. Entsprechend ist die in FIG 3 gezeigte Konfiguration ein Beispiel für das in der Beschreibungseinleitung zur Lösung der dort definierten Aufgabe erwähnte System.

Der Netzwerkrechteagent 42 ist zunächst dafür vorgesehen, das Rechteobjekt 40 zu empfangen und zu verarbeiten. Aus dem empfangenen Rechteobjekt 40 wird zumindest ein abgeleitetes Rechteobjekt 44 generiert und an eine oder einzelne Vorrichtungen 22-30 weitergeleitet. Zum Generieren abgeleiteter Rechteobjekte 44 hat der Netzwerkrechteagent 42 Zugriff auf Erzeugungsregeln 46, die in der Darstellung in FIG 3 als Datenbasis, in der solche Regeln vorgehalten sein können, dargestellt sind. Zum Weiterleiten einzelner oder mehrerer abgeleiteter Rechteobjekte 44 an einzelne, mehrere oder alle Vorrichtungen 22-30 hat der Netzwerkrechteagent 42 Zugriff auf Weiterleitungsregeln 48, die ebenfalls in Form einer Datenbasis, in der solche Regeln zusammengefasst sein können, dargestellt sind.

Die Erzeugungsregeln 46 werden zumindest teilweise mit dem jeweiligen Rechteobjekt 40 empfangen, so dass diese ursprünglich von dem Rechteobjekt 40 umfasst sind und entweder direkt aus dem empfangenen Rechteobjekt 40 oder aus der dargestellten Datenbasis in Zugriff genommen werden. Die Weiterleitungsregeln 48 können auch zumindest teilweise von dem ursprünglich empfangenen Rechteobjekt 40 umfasst sein. Daneben ist auch eine separate Zurverfügungstellung von Weiterleitungsregeln 48 vorgesehen. Von dem Rechteobjekt 40 evtl. umfasste Weiterleitungsregeln 48 werden entweder direkt bei diesem oder sämtliche Weiterleitungsregeln 48 in einer dafür vorgesehenen Datenbasis in Zugriff genommen.

Die Generierung abgeleiteter Rechteobjekte 44 auf Basis des empfangenen Rechteobjekts 40 und der davon umfassten Erzeugungsregeln 46 kann sich z.B. je nach Produktbeschreibung 36, speziell, wenn das herzustellende Produkt eine vorherige Herstellung einzelner Teile bedingt, auf die Generierung eines abgeleiteten Rechteobjekts 44 für jeweils eine Vorrichtung 22-30 beziehen. Mit jeder Vorrichtung 22-30 kann genau eines der Einzelteile gefertigt werden, und zwar unter den von dem ursprünglich empfangenen Rechteobjekt 40 definierten Rahmenbedingungen. Eine weitere Vorrichtung 22-30 wird entsprechend gleicher Bedingungen zum Zusammenbau der Einzelteile zugelassen. In einem anderen Szenario kann die Situation vorkommen, dass mehrere der Vorrichtungen 22-30 zur Herstellung des Produkts oder einzelner Teile desselben geeignet sind, so dass bei drei oder mehr in dieser Hinsicht geeigneten Vorrichtungen 22-30 diese durch Generierung entsprechender abgeleiteter Rechteobjekte 44 zur Produktion eines Drittels, eines Viertels usw. der mit dem ursprünglich empfangenen Rechteobjekt 40 zugelassenen Gesamtmenge freigeschaltet werden.

In einer besonders bevorzugten Ausführungsform, die durch den Doppelpfeil zwischen Anlage 20 und Netzwerkrechteagent 42 verdeutlicht wird, ist vorgesehen, dass das Weiterleiten abgeleiteter Rechteobjekte 44 aufgrund separat zur Verfügung gestellter Weiterleitungsregeln 48 einen Datenaustausch zwischen Anlage 20 und Netzwerkrechteagent 42 umfasst, wobei während dieses Datenaustausches der Netzwerkrechteagent 42 zunächst feststellt, welche Vorrichtung oder Vorrichtungen 22-30 zum Ausführen von Operationen, die mit dem empfangenen Rechteobjekt 40 oder einem abgeleiteten Rechteobjekt 44 zugelassen werden, geeignet ist. Dazu umfasst das empfangene Rechteobjekt oder ein daraus abgeleitetes Rechteobjekt 44 eine Codierung der auszuführenden Operation und bei der oder jeder Vorrichtung 22-30 ist eine Codierung von Operationen, die diese ausführen kann, abrufbar. Auf diese Art und Weise lässt sich ermitteln, welche der Vorrichtungen 22-30 für einzelne Operationen in Betracht kommen. Mit diesen Informationen kann eine Menge 50 gebildet werden, welche die oder jede geeignete Vorrichtung 22-30 umfasst. In einem sich daran anschließenden Schritt ermittelt der Netzwerkrechteagent 42 oder eine von dem Netzwerkrechteagenten 42 dafür aufgerufene Funktionalität eine momentane oder zukünftige Auslastung jeder von der zuvor ermittelten Menge 50 umfassten Vorrichtung 22-30. Dazu nimmt der Netzwerkrechteagent 42 oder eine von diesem aufgerufene Funktionalität Zugriff auf momentane oder zukünftige Auslastungen einer jeden Vorrichtung 22-30 codierende Informationen entweder bei der jeweiligen Vorrichtung 22-30 selbst oder an zentraler Stelle der Anlage 20, z.B. bei dem Server. In Ansehung dieser Informationen wird die Menge 50 durch Eliminierung jeder Vorrichtung 22-30, für die eine Auslastung oberhalb eines vorgegebenen oder vorgebbaren Schwellwertes ermittelt wurde, reduziert. Der Schwellwert kann sich dabei aus den von dem ursprünglich empfangenen Rechteobjekt 40 umfassten Daten ergeben, z.B. derart, dass ein abgeleitetes Rechteobjekt 44 nicht an eine Vorrichtung 22-30, die während einer bestimmten Zeitspanne ausgelastet ist, weitergeleitet wird, wenn die mit dem Rechteobjekt 40 zugelassenen Operationen nur für einen während dieser Zeitspanne ablaufenden Zeitraum eingeräumt werden. Ansonsten können bei der Weiterleitung abgeleiteter Rechteobjekte 44 Kriterien aus der linearen oder dynamischen Optimierung zugrunde gelegt werden, so dass die in Auftrag gegebene Dienstleistung mit Vorrichtungen 22-30 erledigt wird, die eine zeit- und/oder kostenoptimale Bearbeitung ermöglichen. Daten, die sich auf eine Auslastungssituation einzelner oder mehrerer Vorrichtungen 22-30 und davon abgeleitete Bedingungen oder Bedingungen, die aus Ansätzen der linearen oder dynamischen Optimierung resultieren, sind Beispiele für separat, also unabhängig vom ursprünglich empfangenen Rechteobjekt 40, zur Verfügung gestellte Weiterleitungsregeln 48.

Zur Erläuterung des Vorstehenden wird nachfolgend exemplarisch eine textuelle Form eines möglichen Inhalts eines Rechteobjekts 40 (FIG 3) dargestellt:

```
 IF ( current-date in time-frame ) ALLOW Produce( part,
 number-of-parts, quality-range, max-machine-number);
 number-of-parts := 100;
 max-machine-number:= 10;
 time-frame := 01.10.2008, 23.12.2008
                         (Rechteobjekt)
```

Anhand der im Wesentlichen selbsterklärenden Syntax für die Spezifikation der mit einem Rechteobjekt 40 definierten Rechte, die einem Auftragnehmer/Betreiber 12 (FIG 2) gewährt werden, ergibt sich für das oben eingeblendete Beispiel, dass maximal einhundert Teile entsprechend der zusammen mit dem Rechteobjekt empfangenen Produktbeschreibung 36 gefertigt werden dürfen, dass diese Fertigung auf maximal zehn Vorrichtungen 22-30 stattfinden darf und die Rechte während des datumsmäßig angegebenen Zeitraums gewährt werden, so dass vor und nach dem angegebenen Zeitraum keine Produktion zugelassen ist.

Für die Erzeugung und Weiterleitung abgeleiteter Rechteobjekte 44 anhand von Erzeugungsregeln 46 und Weiterleitungsregeln 48 können zusätzliche Informationen in Betracht gezogen werden, die nachfolgend als Konfigurations- und Randbedingungsdaten ebenfalls exemplarisch eingeblendet sind:

```
 M1: type T, M2: type T' [, ...]
 Machine M1 can produce x parts in time y with quality z when
 using configuration conf;
 Machine M2 can produce x' parts in time y' with quality z'
 when using configuration conf'
                     (Konfigurationsdaten)
 Machine M1 available from time t1 to time t2;
 Machine M2 available from time t1' to time t2'
                     (Randbedingungsdaten)
```

Ein Beispiel eines Inhalts eines abgeleiteten Rechteobjekts 44, wobei der Netzwerkrechteagent 42 für dessen Generierung grundsätzlich an sich bekannte Optimierungsverfahren, wie sie z.B. zur Lösung des Job-Shop-Scheduling-Problems vorgeschlagen wurden (lineare Optimierung, dynamische Optimierung, Branch-and-Bound, genetische Algorithmen etc.), verwenden kann, ist abschließend exemplarisch eingeblendet:

```
 ALLOW Produce( part, 20, conf);
                  (abgeleitetes Rechteobjekt)
```

Die Verwendung der genannten oder sonst in Frage kommenden Optimierungsverfahren bezieht sich darauf, dass dem Netzwerkrechteagent 42 entweder in den Weiterleitungsregeln 48 oder in sonst geeigneter Weise Information über die Konfiguration der Anlage 20, speziell über die Art der davon umfassten Vorrichtungen 22-30 vorliegen. Bereits auf Grundlage solcher statischer Daten kann der Netzwerkrechteagent 42 eine anfängliche Optimierung dadurch vornehmen, dass abgeleitete Rechteobjekte 44 generiert werden, so dass die in Auftrag gegebene Dienstleistung mit der Anlage 20 optimal ausgeführt werden kann, z.B. durch Generierung mehrerer abgeleiteter Rechteobjekte 44, wenn die Anlage mehrere gleiche Vorrichtungen 22-30 umfasst und so Teilaufgaben parallel abgearbeitet werden können. Sobald dynamische Daten, z.B. Daten die die Auslastung einzelner Vorrichtungen 22-30 kodieren, hinzukommen, kann die Optimierung verfeinert werden, so dass eine Aufteilung gleicher Teilaufgaben auf mehrere Vorrichtungen z.B. nur dann vorgenommen wird, wenn die Ergebnisse der Teilaufgaben mit einer entsprechenden Geschwindigkeit weiterver- oder bearbeitet werden können. Die Variationsmöglichkeiten sind hier kaum abzuschätzen und für die Beschreibung der vorliegenden Erfindung mag der Hinweis genügen, dass der Netzwerkrechteagent 42 oder eine von diesem benutzte Funktionalität eine Implementation geeigneter Optimierungsverfahren umfasst.

Damit lässt sich die Erfindung kurz wie folgt darstellen:
Die Erfindung betrifft ein Verfahren zum Verarbeiten von Rechten, die einem Betreiber einer Vorrichtung 22, 24, 26, 28, 30 oder einer Gruppe von Vorrichtungen 22-30 mittels eines Rechteobjekts 40 gewährt werden, welches zumindest das Empfangen eines Rechteobjekts 40 von einem Dritten, das Generieren zumindest eines abgeleiteten Rechteobjekts 44 auf der Grundlage des empfangenen Rechteobjekts 40 und das Weiterleiten des oder jedes abgeleiteten Rechteobjekts 44 an die Vorrichtung 22-30 oder einzelne Vorrichtungen aus der Gruppe von Vorrichtungen 22-30 umfasst, sowie ein nach dem Verfahren arbeitendes System und ein Gerät, welches zur Ausführung des Verfahrens bestimmt ist.

## Patentansprüche

1. Verfahren zum Verarbeiten von Rechten, die einem Betreiber einer Vorrichtung (22,24,26,28,30) oder einer Gruppe von Vorrichtungen (22-30) mittels eines Rechteobjekts (40) gewährt werden, mit folgenden Schritten:
Empfangen eines Rechteobjekts (40) von einem Dritten;
Generieren zumindest eines abgeleiteten Rechteobjekts (44) auf der Grundlage des empfangenen Rechteobjekts (40);
Weiterleiten des oder jedes abgeleiteten Rechteobjekts (44) an die Vorrichtung (22-30) oder einzelne Vorrichtungen aus der Gruppe von Vorrichtungen (22-30).

2. Verfahren nach Anspruch 1, wobei der Schritt des Generierens des oder jedes abgeleiteten Rechteobjekts (44) mittels eines Netzwerkrechteagenten (42) durchgeführt wird, welcher dazu Erzeugungsregeln (46) verwendet, die von dem empfangenen Rechteobjekt (40) umfasst sind.

3. Verfahren nach Anspruch 1, wobei der Schritt des Weiterleitens abgeleiteter Rechteobjekte (44) mittels eines Netzwerkrechteagenten (42) durchgeführt wird, welcher dazu mit der oder jeder Vorrichtung (22-30) kommunikativ verbunden ist.

4. Verfahren nach Anspruch 3, wobei der Netzwerkrechteagent (42) zum Weiterleiten abgeleiteter Rechteobjekte (44) Weiterleitungsregeln (48) verwendet, die von dem empfangenen Rechteobjekt (40) umfasst sind oder separat zur Verfügung gestellt werden.

5. Verfahren nach Anspruch 3, wobei das Weiterleiten abgeleiteter Rechteobjekte (44) aufgrund separat zur Verfügung gestellter Weiterleitungsregeln (48) folgende Schritte umfasst:
Feststellen, welche Vorrichtung oder Vorrichtungen (22-30) aus der Gruppe von Vorrichtungen (22-30) zum Ausführen von Operationen die mit dem empfangenen Rechteobjekt (40) oder einem abgeleiteten Rechteobjekt (44) zugelassen werden, geeignet ist, und Bilden einer Menge (50), welche die oder jede geeignete Vorrichtung umfasst;
Ermitteln einer momentanen oder zukünftigen Auslastung jeder von der zuvor ermittelten Menge (50) umfassten Vorrichtung (22-30) und Reduzieren der Menge (50) durch Eliminierung jeder Vorrichtung (22-30), für die eine Auslastung oberhalb eines vorgegebenen oder vorgebbaren Schwellwerts ermittelt wurde und
Weiterleiten des oder jedes abgeleiteten Rechteobjekts (44) an die oder jede Vorrichtung (22-30), die zuletzt noch von der Menge (50) umfasst ist.

6. Verfahren nach Anspruch 1, wobei der Schritt des Empfangens eines Rechteobjekts (40) von einem Dritten zumindest den folgenden Schritt umfasst:
Überprüfen einer von dem empfangenen Rechteobjekt (40) umfassten Signatur, die von dem Dritten zur Authentifikation des Rechteobjekts (40) angebracht wurde.

7. Verfahren nach Anspruch 2, wobei der Schritt des Empfangens eines Rechteobjekts (40) von einem Dritten zumindest den folgenden Schritt umfasst:
Entschlüsseln des empfangenen Rechteobjekts (40) mit einem Schlüssel eines Schlüsselpaars von dem der öffentliche Teil dem Dritten zur Verschlüsselung des Rechteobjekts (40) übermittelt wurde oder übermittelt wird.

8. Verfahren nach Anspruch 7, wobei der Schlüssel zum Entschlüsseln des empfangenen Rechteobjekts (40) in einem nur dem Netzwerkrechteagenten (42) zugänglichen Speicher hinterlegt ist.

9. System zum Verarbeiten von Rechten, die einem Betreiber einer Vorrichtung (22-30) oder einer Gruppe von Vorrichtungen (22-30) mittels eines Rechteobjekts (40) gewährt werden, wobei das System mit der oder jeder Vorrichtung (22-30) kommunikativ verbunden oder verbindbar ist, mit
Mitteln zum Empfangen eines Rechteobjekts (40) von einem Dritten;
Mitteln zum Generieren zumindest eines abgeleiteten Rechteobjekts (44) auf der Grundlage des empfangenen Rechteobjekts (40);
Mitteln zum Weiterleiten des oder jedes abgeleiteten Rechteobjekts (44) an die Vorrichtung (22-30) oder einzelne Vorrichtungen aus der Gruppe von Vorrichtungen (22-30).

10. System nach Anspruch 9, wobei als Mittel zum Generieren abgeleiteter Rechteobjekte (44) ein Netzwerkrechteagent (42) fungiert, der Zugriff auf Erzeugungsregeln (46) hat und diese bei der Generierung abgeleiteter Rechteobjekte (44) verwendet.

11. System nach Anspruch 9, wobei als Mittel zum Weiterleiten abgeleiteter Rechteobjekte (44) ein Netzwerkrechteagent (42) fungiert, der mit der oder jeder Vorrichtung (22-30) des Betreibers kommunikativ verbunden oder verbindbar ist.

12. Gerät zum Verarbeiten von Rechten, die einem Betreiber einer Vorrichtung (22-30) oder einer Gruppe von Vorrichtungen (22-30) mittels eines Rechteobjekts (40) gewährt werden, wobei das Gerät mit der oder jeder Vorrichtung (22-30) kommunikativ verbunden oder verbindbar ist, mit
einer Funktionalität zum Empfangen eines Rechteobjekts (40) von einem Dritten;
einer Funktionalität zum Generieren zumindest eines abgeleiteten Rechteobjekts (44) auf der Grundlage des empfangenen Rechteobjekts (40);
einer Funktionalität zum Weiterleiten des oder jedes abgeleiteten Rechteobjekts (44) an die Vorrichtung (22-30) oder einzelne Vorrichtungen aus der Gruppe von Vorrichtungen (22-30).

13. Gerät nach Anspruch 12, wobei mittels der Funktionalität zum Weiterleiten abgeleiteter Rechteobjekte (44) Weiterleitungsregeln (48) anwendbar sind, die von dem empfangenen Rechteobjekt (40) umfasst sind oder unabhängig davon für eine Verwendung durch diese Funktionalität zur Verfügung stehen.

14. Gerät nach Anspruch 13, wobei die Funktionalität zum Weiterleiten abgeleiteter Rechteobjekte (44) auf Basis von unabhängig von dem empfangenen Rechteobjekt (40) zur Verfügung gestellter Weiterleitungsregeln (48)
eine Funktionalität zum Feststellen, welche Vorrichtung oder Vorrichtungen (22-30) aus der Gruppe von Vorrichtungen (22-30) zum Ausführen von Operationen, die mit dem empfangenen Rechteobjekt (40) oder einem abgeleiteten Rechteobjekt (44) zugelassen werden, geeignet ist, und zum Bilden einer Menge (50), welche die oder jede geeignete Vorrichtung umfasst; eine Funktionalität zum Ermitteln einer momentanen oder zukünftigen Auslastung jeder von der zuvor ermittelten Menge (50) umfassten Vorrichtung (22-30) und zum Reduzieren der Menge (50) durch Eliminierung jeder Vorrichtung (22-30), für die eine Auslastung oberhalb eines vorgegebenen oder vorgebbaren Schwellwerts ermittelt wurde und
eine Funktionalität zum Weiterleiten des oder jedes abgeleiteten Rechteobjekts (44) an die oder jede Vorrichtung (22-30), die zuletzt noch von der Menge (50) umfasst ist, umfasst.

15. Gerät nach Anspruch 12, mit einer Funktionalität zum Überprüfen einer von dem empfangenen Rechteobjekt (40) umfassten Signatur, die von dem Dritten zur Authentifikation des Rechteobjekts (40) angebracht wurde.

16. Gerät nach Anspruch 12, welches als zum Rechtemanagement zweckbestimmtes Gerät, insbesondere als dezentrale Netzwerkkomponente, in einer Produktionsumgebung fungiert.

17. Computerprogramm zur Ausführung eines Verfahrens gemäß einem der Ansprüche 1 bis 8.

18. Datenträger mit einem Computerprogramm nach Anspruch 17 oder Computersystem, auf dem ein derartiges Computerprogramm geladen ist.
